# EUROPEAN PATENT APPLICATION

(11) **EP 4 383 443 A1**
(43) Date of publication of application: **12.06.2024**
(21) Application number: 22911576.1
(22) Date of filing: 26.10.2022
(51) Int. Cl.: H01M 50/54, B23K 37/04

(54) **MULTIPURPOSE JIG FOR MANUFACTURING RECHARGEABLE BATTERY AND METHOD FOR SETTING MANUFACTURING APPARATUS USING SAME**

(30) Priority: 20.12.2021 KR 20210182734
(71) Applicant: LG Energy Solution, Ltd., Seoul 07335 (KR)
(72) Inventor: KIM, Sanghun, Daejeon 34122 (KR)
(74) Representative: Goddar, Heinz J.
(86) International application number: PCT/KR2022/016494
(87) International publication number: WO 2023/120938

(57) **Abstract**

A multipurpose jig according to an embodiment of the present invention, which is used to set a secondary battery manufacturing apparatus, includes: a main body part; a first measurement part protruding from one end of the main body part based on a longitudinal direction of the main body part; and a second measurement part formed to have a stepped portion at the other end thereof based on the longitudinal direction of the main body part.

## Description

### [Technical Field]

### CROSS-REFERENCE TO RELATED APPLICATION(S)

This application claims priority to and the benefit of Korean Patent Application No. 10-2021-0182734 filed in the Korean Intellectual Property Office on December 20, 2021, the entire contents of which are incorporated herein by reference.

The present invention relates to a multipurpose jig for manufacturing a secondary battery, and more particularly, to a jig that may be used to set a secondary battery manufacturing apparatus. In addition, the present invention relates to a method of setting a secondary battery manufacturing apparatus by using the multipurpose jig.

### [Background Art]

A rapid increase in the use of fossil fuels has increased the need for the use of alternative energy or clean energy. Power generation and power accumulation using electrochemistry have been most actively studied in the field of alternative energy or clean energy.

At present, a representative example of an electrochemical element using electrochemical energy is a secondary battery. A region in which the secondary battery is used tends to be expanded gradually.

Recently, as technical research and demands for portable devices such as portable computers, mobile phones, and cameras increase, there are rapidly increasing demands for secondary batteries as energy sources. Among the secondary batteries, many studies have been conducted on lithium secondary batteries having high energy density and action potential, a long cycle lifespan, and a low self-discharge rate. In addition, the lithium secondary batteries have been commercially available and widely used.

In addition, as interest in environmental issues increases, many studies have been conducted on electric vehicles, hybrid electric vehicles, and the like that may be substituted for vehicles such as gasoline vehicles and diesel vehicles that use fossil fuel that is one of the main causes of air pollution. Nickel-hydrogen-metal secondary batteries are mainly used as power sources for the electric vehicles and the hybrid electric vehicle. However, studies are being actively conducted on the use of the lithium secondary batteries having high energy density and high discharge voltage, and some lithium secondary batteries have been commercially available.

In general, the secondary battery is configured such that an electrode assembly, which includes a positive electrode, a negative electrode, and a separator interposed between the positive electrode and the negative electrode, is accommodated in a can or a pouch-type casing.

During a process of manufacturing the secondary battery, the electrode assembly including the positive electrode, the negative electrode, and the separator may be manufactured through a pre-welding process of connecting electrode tabs of the plurality of positive electrodes and electrode tabs of the plurality of negative electrodes, a cutting process of cutting the pre-welded electrode tab into a predetermined length, and a main welding process of welding a lead to the welded electrode tab.

An apparatus, which serves to perform the above-mentioned processes, needs to accurately set a position of a welding part in consideration of a configuration of a secondary battery to be manufactured, for example, positions of a plurality of electrode tabs to be welded in the stacked electrode assembly in order to produce the secondary battery with high quality.

Typically, this setting is performed with respect to an actual secondary battery.

However, in case that the actual product is used, there are problems in that a state of the secondary battery may be easily deformed because of an ambient environment, a deviation occurs between the respective secondary batteries, and the use of the actual product is insufficient occurs in terms of accuracy and time consumption. In addition, a deviation may occur between a plurality of facilities in the same process in accordance with states of the secondary battery used, which causes a problem in that an accurate process cannot be performed.

### [Disclosure]

### [Technical Problem]

The present invention has been made in an effort to provide a multipurpose jig for manufacturing a secondary battery and a method of setting a secondary battery manufacturing apparatus by using the same, which may conveniently and accurately set a secondary battery manufacturing apparatus and set all assembling facilities by using a single jig during a process.

However, the object to be achieved by the embodiments of the present invention is not limited to the above-mentioned object but may be variously expanded without departing from the technical spirit of the present invention.

### [Technical Solution]

An exemplary embodiment of the present invention provides a multipurpose jig, which is used to set an apparatus for manufacturing a secondary battery, including: a main body part; a first measurement part protruding from one end of the main body part based on a longitudinal direction of the main body part; and a second measurement part formed to have a stepped portion at the other end thereof based on the longitudinal direction of the main body part.

The first measurement part may protrude from a center based on a thickness direction of the main body part.

A position of the first measurement part may correspond to a position of each of electrode tabs connected to a plurality of electrodes included in the secondary battery.

A thickness of the first measurement part may correspond to a thickness of each of the electrode tabs connected to a plurality of electrodes included in the secondary battery.

A graduation part may be provided on a lateral surface of the second measurement part and formed on a protruding portion further protruding outward from the stepped portion.

The multipurpose jig may be configured by a 3D printer.

Another exemplary embodiment of the present invention provides a method of setting a secondary battery manufacturing apparatus by using the multipurpose jig for manufacturing a secondary battery, the method including: moving the multipurpose jig to a setting part of the secondary battery manufacturing apparatus to be set so that the first measurement part is directed toward the setting part; and setting a position of the setting part based on the first measurement part.

The setting part may include the upper device and the lower device based on electrode tabs connected to a plurality of electrodes included in the secondary battery, and the setting of the position of the setting part may include identifying whether at least one of the upper device and the lower device is in contact with at least one of the upper device and the lower surface of the first measurement part.

Still another exemplary embodiment of the present invention provides a method of setting a secondary battery manufacturing apparatus by using the multipurpose jig for manufacturing a secondary battery, the method including: moving the multipurpose jig to a setting part of the secondary battery manufacturing apparatus to be set so that the second measurement part is directed toward the setting part; and setting a position of the setting part based on the second measurement part.

The setting part may include an upper device and a lower device based on electrode tabs connected to a plurality of electrodes included in the secondary battery, and the setting of the position of the setting part may include identifying, by means of the second measurement part, whether the upper device and the lower device are aligned to be spaced apart from a working stage, on which the secondary battery is disposed, by the same distance.

A graduation part may be provided on a lateral surface of the second measurement part and formed on a protruding portion further protruding outward from the stepped portion.

The identifying of whether the upper device and the lower device are aligned to be spaced apart from the working stage by means of the second measurement part may include: bringing an end of the protruding portion into contact with the upper device and measuring a first interval between the working stage and the upper device by means of the graduation part; inverting the multipurpose jig, bringing the end of the protruding portion into contact with the lower device, and measuring a second interval between the working stage and the lower device by means of the graduation part; and identifying whether the first interval and the second interval are equal to each other and correcting the setting part so that the first interval and the second interval are equal to each other.

The identifying of whether the upper device and the lower device are aligned to be spaced apart from the working stage by means of the second measurement part may include: disposing the secondary battery on the working stage so that the electrode tab is disposed between the upper device and the lower device; disposing the multipurpose jig on the secondary battery so that a lateral surface of the secondary battery is parallel to the graduation part; and setting, by the graduation part, an interval between an end of a separator of the secondary battery and the upper device to a predetermined value.

### [Advantageous Effects]

The multipurpose jig for manufacturing a secondary battery according to the embodiment may allow an operator to use the single jig to perform the setting at multiple positions during the processes of the secondary battery manufacturing apparatus. Therefore, it is possible to improve setting precision by minimizing a deviation between the processes, reduce a setting time of the secondary battery manufacturing apparatus, and improve productivity.

Further, the secondary battery manufactured according to the embodiment may be manufactured as a product with high quality without incurring a manufacturing defect by the apparatus that is always constantly set.

The effects of the present invention are not limited to the aforementioned effects, and other effects, which are not mentioned above, will be clearly understood by those skilled in the art from the claims.

### [Description of the Drawings]

FIG. 1 is a perspective view illustrating a multipurpose jig for manufacturing a secondary battery according to an embodiment of the present invention.
FIG. 2 is a view illustrating a cross-section of a multipurpose jig taken along line II-II in FIG. 1.
FIG. 3 is an enlarged view of part III of the multipurpose jig in FIG. 1 when viewed from the front side.
FIG. 4 is a view for explaining a first usage example in which the multipurpose jig in FIG. 1 is used to set a secondary battery manufacturing apparatus.
FIG. 5 is a view for explaining a second usage example in which the multipurpose jig in FIG. 1 is used to set the secondary battery manufacturing apparatus.
FIGS. 6A and 6B are views for explaining a third usage example in which the multipurpose jig in FIG. 1 is used to set the secondary battery manufacturing apparatus.
FIG. 7 is a view for explaining a fourth usage example in which the multipurpose jig in FIG. 1 is used to set the secondary battery manufacturing apparatus.

### [Mode for Invention]

Hereinafter, an embodiment of the present invention will be described in detail with reference to the accompanying drawings so that those skilled in the technical field to which the present invention pertains may easily carry out the embodiment. The present invention may be implemented in various different ways and is not limited to the embodiments described herein.

A part irrelevant to the description will be omitted to clearly describe the present invention, and the same or similar constituent elements will be designated by the same reference numerals throughout the specification.

In addition, a size and thickness of each constituent element illustrated in the drawings are arbitrarily shown for convenience of description, but the present invention is not limited thereto. In order to clearly describe several layers and regions, thicknesses thereof are enlarged in the drawings. In the drawings, the thicknesses of some layers and regions are exaggerated for convenience of description.

In addition, when one component such as a layer, a film, a region, or a plate is described as being positioned "above" or "on" another component, one component can be positioned "directly on" another component, and one component can also be positioned on another component with other components interposed therebetween. On the contrary, when one component is described as being positioned "directly on" another component, there is no component therebetween. In addition, when a component is described as being positioned "above" or "on" a reference part, the component may be positioned "above" or "below" the reference part, and this configuration does not necessarily mean that the component is positioned "above" or "on" the reference part in a direction opposite to gravity.

Throughout the specification, unless explicitly described to the contrary, the word "comprise/include" and variations such as "comprises/includes" or "comprising/including" will be understood to imply the inclusion of stated elements, not the exclusion of any other elements.

Throughout the specification, the word "in a plan view" means when an object is viewed from above, and the word "in a cross-sectional view" means when a cross section made by vertically cutting an object is viewed from a lateral side.

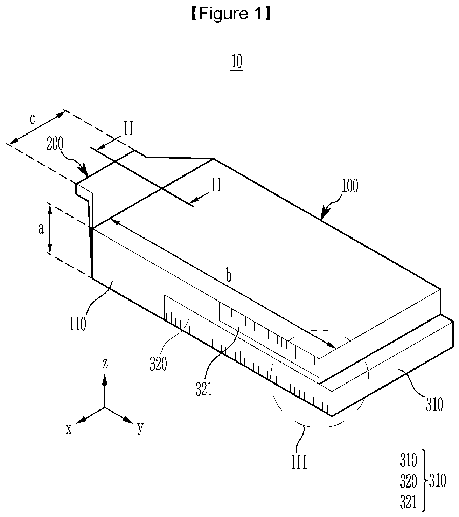

Hereinafter, a multipurpose jig for manufacturing a secondary battery according to an embodiment of the present invention will be described with reference to FIGS. 1 to 3.

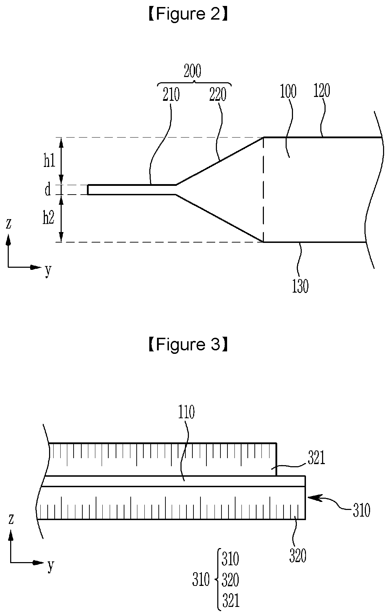

FIG. 1 is a perspective view illustrating a multipurpose jig for manufacturing a secondary battery according to an embodiment of the present invention, FIG. 2 is a view illustrating a cross-section of a multipurpose jig taken along line II-II in FIG. 1, and FIG. 3 is an enlarged view of part III of the multipurpose jig in FIG. 1 when viewed from the front side.

The multipurpose jig according to the embodiment is used as a single jig configured to set multiple parts of the secondary battery manufacturing apparatus. The secondary battery manufacturing apparatus according to the embodiment may be an apparatus for manufacturing a pouch-type secondary battery. For example, the secondary battery manufacturing apparatus may be an apparatus that performs: a pre-welding process of welding and fixing a plurality of positive electrodes tabs or a plurality of negative electrode tabs respectively provided on a plurality of positive electrodes or a plurality of negative electrodes that constitute an electrode assembly of a pouch-type secondary battery; a cutting process of partially cutting the welded positive electrode tab or the welded negative electrode tab, or a main welding process of welding a lead to the welded positive electrode tab or the welded negative electrode tab.

As illustrated in FIG. 1, a multipurpose jig 10 includes a main body part 100, a first measurement part 200 protruding from one end of the main body part 100 based on the longitudinal direction of the main body part 100, and a second measurement part 300 formed to have a stepped portion at the other end thereof based on the longitudinal direction of the main body part 100. In this case, the longitudinal direction of the main body part 100 may be a y-axis direction in the drawings. One end of the main body part 100 at which the first measurement part 200 is formed may be an end based on a - direction of the y-axis direction. The other end of the main body part 100 at which the second measurement part 300 is formed may be an end based on a + direction of the y-axis direction.

The main body part 100 may have a quadrangular tube shape including upper surface 120 and lower surface 130 respectively formed at an upper side (+) and a lower side (-) based on a z-axis direction, and a lateral surface 110 configured to connect the upper surfaces 120 and lower surface 130. The main body part 100 may substantially have a size and shape corresponding to a portion of the electrode assembly of the secondary battery where the electrode and the separator are stacked. That is, a thickness (a) of the main body part 100 may be a thickness of the portion where the electrode and the separator of the electrode assembly are stacked. A length (b) of the main body part 100 may be a length of the portion where the electrode and the separator of the electrode assembly are stacked.

The first measurement part 200 is integrated with the main body part 100 and protrudes from one end based on the longitudinal direction of the main body part 100. The first measurement part 200 may be similar in shape to the electrode tab of the electrode assembly of the secondary battery. That is, as illustrated in FIG. 2, the first measurement part 200 includes an inclined portion 220 extending from the main body part 100, and a tab shape part 210 protruding from the inclined portion 220. In this case, the tab shape part 210 protrudes from a center based on a thickness direction of the main body part 100. That is, a height h1 between the tab shape part 210 and the upper surface 120 of the main body part 100 is equal to a height h2 from the lower surface 130 of the main body part 100 to the tab shape part 210. Therefore, the tab shape part 210 may be used to set a center of the secondary battery manufacturing apparatus, and a detailed configuration thereof will be described below.

Meanwhile, a thickness (d) of the tab shape part 210 may correspond to a thickness of the electrode tab. The thickness of the electrode tab may also vary depending on the specifications of the secondary battery to be manufactured. Therefore, because the thickness (d) of the tab shape part 210 is equal to the thickness of the electrode tab of the secondary battery, it is possible to set the equipment related to the electrode tab, for example, a tab guide or an upper or lower device applied to the welding process or an electrode tab cutting part at an appropriate height at the time of manufacturing the multipurpose jig 10 corresponding to the secondary battery. Specific usage examples of this configuration will also be described below.

Referring to FIGS. 1 and 3, the second measurement part 300, which is integrated in the main body part 100 and has the stepped portion at the other end thereof based on the longitudinal direction of the main body part 100, may include: a protruding portion 310 protruding in a direction identical to the longitudinal direction of the main body part 100 to form the stepped portion; and a graduation part 320 formed on the lateral surface 110 of the main body part 100 and formed to a portion corresponding to the protruding portion 310. In addition, an auxiliary graduation part 321 may be further provided on the lateral surface 110 of the portion that does not protrude. Meanwhile, in the present embodiment, the stepped portion is illustrated in a stepped shape, but the stepped shape is exemplary. The present invention is not limited thereto, and the stepped portion may have, but not particularly limited to, an obliquely inclined shape or the like. The second measurement part 300 may be used to perform the setting while identifying whether a mechanism having a separated upper device and lower device is aligned at an accurate position. Specific usage examples of this configuration will be described below.

The multipurpose jig 10 according to the embodiments configured as described above may be manufactured by a 3D printer, and a material of the multipurpose jig 10 may include resin. Therefore, the multipurpose jig 10 may be manufactured to be light in weight and have an accurate dimension.

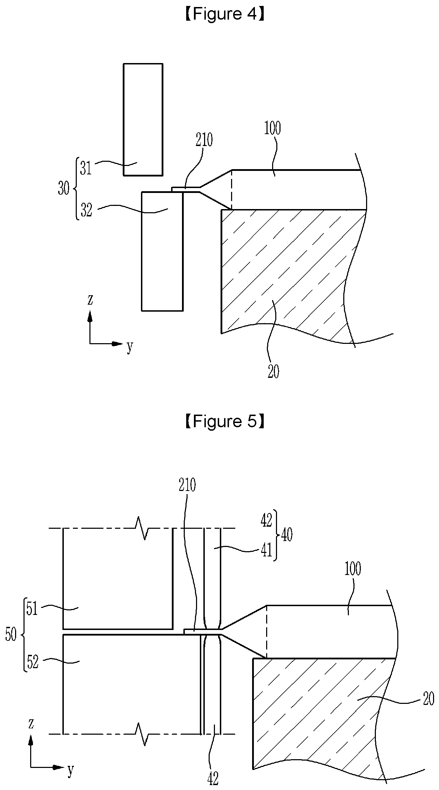

Hereinafter, usage examples in which the multipurpose jig according to the embodiment is used to set the secondary battery manufacturing apparatus will be described with reference to FIGS. 4 to 7.

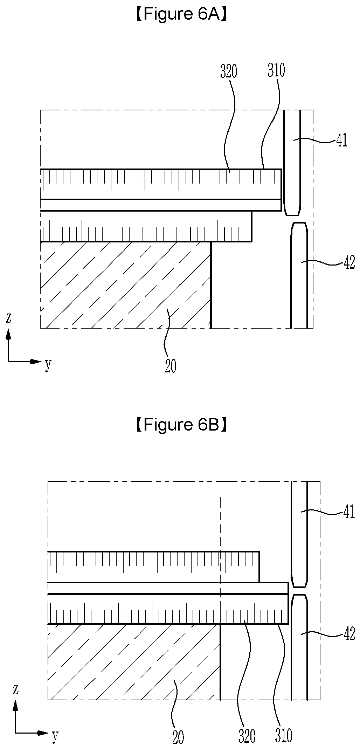

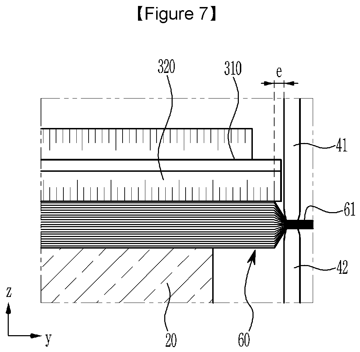

FIG. 4 is a view for explaining a first usage example in which the multipurpose jig in FIG. 1 is used to set a secondary battery manufacturing apparatus, FIG. 5 is a view for explaining a second usage example in which the multipurpose jig in FIG. 1 is used to set the secondary battery manufacturing apparatus, FIGS. 6A and 6B are views for explaining a third usage example in which the multipurpose jig in FIG. 1 is used to set the secondary battery manufacturing apparatus, and FIG. 7 is a view for explaining a fourth usage example in which the multipurpose jig in FIG. 1 is used to set the secondary battery manufacturing apparatus.

Referring to FIG. 4, the multipurpose jig 10 may be used to set a center of an electrode tab cutter 30. That is, the electrode tab cutter 30 may include an upper blade 31 and a lower blade 32 based on a position at which the electrode tab is positioned. In this case, the positions of the upper blade 31 and the lower blade 32 need to be set to accurate positions based on the electrode tab to accurately perform the cutting process.

To this end, the lower blade 32 is raised to an operating position first, the multipurpose jig 10 is disposed on a working stage 20, and the tab shape part 210 of the first measurement part 200 is inserted into a portion where the lower blade 32 is positioned. In this case, it is determined that the electrode tab cutter 30 is set at the accurate position when interference occurs between the lower blade 32 and the tab shape part 210. In contrast, on the contrary, in case that interference does not occur because the lower blade 32 protrudes to a position higher than the tab shape part 210 or the tab shape part 210 and the lower blade 32 are not in contact with each other, it is determined that the electrode tab cutter 30 is not set at the accurate position, and the apparatus is set again. As described above, the position of the electrode tab cutter 30 is set by the multipurpose jig 10 to reduce a defect rate in a cutting process, such that the electrode tab cutter 30 may be set again at the accurate position because the shape of the multipurpose jig 10 is constantly maintained even though repeated setting is performed. Therefore, the accurate and quick setting may be performed.

Meanwhile, the usage examples have been described in which the center of the electrode tab cutter is set. However, the present invention is not limited thereto. The multipurpose jig 10 according to the present embodiment may be used to set an upper position and a lower position of another device, e.g., an electrode tab press, which needs to be adjust in an upper height and a lower height with the electrode tab interposed therebetween.

Referring to FIG. 5, the multipurpose jig 10 may be used to set an upper position and a lower position of upper guide 41 and lower guide 42 of a tab guide 40 during the welding process.

That is, the welding process may be performed to connect the plurality of positive electrode tabs or the plurality of negative electrode tabs connected to the plurality of positive electrodes or the plurality of negative electrodes included in the electrode assembly of the pouch-type secondary battery. In this case, the tab guide 40 may be applied to collect and fix the plurality of electrode tabs. The electrode tabs fixed by the tab guide 40 may be welded by a welding apparatus 50. In this case, the welding apparatus 50 may include a welding table (or an anvil) 51 and a welder (or a horn) 52.

The tab guide 40 includes the upper guide 41 and the lower guide 42, and the electrode tabs are set to be disposed between the upper lower guide 41 and lower guide 42. To this end, the multipurpose jig 10 is disposed on the working stage 20, and the tab shape part 210 of the first measurement part 200 is positioned between the upper guide 41 and the lower guide 42. In this case, it is most preferred that the setting is performed at a position at which the upper guide 41 and the lower guide 42 are in contact with the tab shape part 210. It is preferred that a gap between the upper guide 41 and the lower guide 42 of the tab shape part 210 is at least 0.5 mm or less.

Further, in the present embodiment, the example has been described in which the position of the tab guide 40 is set, but the present invention is not limited thereto. The multipurpose jig may be used to directly set the position of the welding apparatus 50 or set and inspect a position of another apparatus including an upper device and a lower device with the electrode tab interposed therebetween. As described above, the multipurpose jig 10 may be used to set the respective upper position and lower position of the upper device and the lower device used for the welding process, which makes it possible to minimize the occurrence of a welding defect or a defect such as disconnection of the electrode tab, enable quick and accurate apparatus setting, and improve efficiency of a manufacturing process.

Referring to FIGS. 6A and 6B, the multipurpose jig 10 may be used to set relative position alignment of the upper guide 41 and the lower guide 42 of the tab guide 40 during the welding process.

That is, in FIG. 5, the first measurement part 200 is used to set the heights of the upper guide 41 and the lower guide 42 based on the tab shape part 210. However, in the present usage example, the second measurement part 300 is used to set the positions of the upper guide 41 and the lower guide 42 based on the y-axis direction. First, as illustrated in FIG. 6A, the multipurpose jig 10 is positioned on the working stage 20 so that an end of the protruding portion 310 is in contact with the upper guide 41. Thereafter, the graduation part 320 is identified, and the upper guide 41 is disposed so that a predetermined interval is provided between the end of the working stage 20 and the upper guide 41.

Next, as illustrated in FIG. 6B, the multipurpose jig 10 is inverted, and the end of the protruding portion 310 is disposed to be in contact with the lower guide 42. Thereafter, the graduation part 320 is identified, and the lower guide 42 is disposed so that an interval, which is equal to the predetermined interval in the upper guide 41, is provided between the end of the working stage 20 and the lower guide 42. In this case, because the graduation part 320 is identified in a state in which only the upper guide 41 and the lower guide 42 and the protruding portion 310 are in contact with one another, it is possible to prevent interference that may occur at a portion except for the portion being in contact with the protruding portion 310 even though the multipurpose jig 10 has a sufficient thickness so that the multipurpose jig 10 has the same thickness as the secondary battery as a whole. Therefore, an interval in an assuredly close contact state may be measured by the graduation part 320.

Therefore, the upper guide 41 and the lower guide 42 may be aligned at the same position without an error. Therefore, the tab guide 40 may be accurately disposed at a predetermined position based on the longitudinal direction of the secondary battery, i.e., the y-axis direction, which makes it possible to accurately support the electrode tab during the welding process. In addition, the upper guide 41 and the lower guide 42 are aligned at the same position without an error, which makes it possible to prevent a welding error or the like caused by a defect in supporting the electrode tab during the welding process.

Further, in the present embodiment, only the tab guide 40 has been exemplarily described. However, the tab guide 40 may be applied to set various devices that need to be aligned in the longitudinal direction of the secondary battery. In addition, the auxiliary graduation part 321, which is provided inside the stepped portion, together with the graduation part 320 may be used to perform the setting at various positions and postures.

Referring to FIG. 7, an interval between an electrode assembly 60 and the tab guide 40 may be set in the state in which the electrode assembly 60 of the secondary battery is disposed by using the multipurpose jig 10 during the welding process.

That is, the second measurement part 300 of the multipurpose jig 10, i.e., the protruding portion 310 is disposed on an upper portion of the electrode assembly 60 so as to be directed toward the upper guide 41 in the state in which the electrode assembly 60 is disposed on the working stage 20 so that an electrode tab 61 of the electrode assembly 60 is interposed between the upper guide 41 and the lower guide 42. Further, whether an interval (e) between the end of the separator of the electrode assembly 60 and the upper guide 41 is a predetermined interval or smaller, e.g., 1 mm or less is identified by means of the graduation part 320, and the position of the electrode assembly 60 may be adjusted to satisfy the condition. In general, whether the electrode assembly 60 is inserted at an exact position is recognized with the naked eye, only an approximate position is identified, and then the process is performed. In contrast, in case that the multipurpose jig 10 is used in the present embodiment, the position of the electrode assembly 60 may be more precisely set by means of the graduation part 320, which makes it possible to accurately set the position of the apparatus to the same position even though the process is performed multiple times.

As described above, the single multipurpose jig according to the embodiment of the present invention may be used to easily and quickly set multiple parts that need to be set in the secondary battery manufacturing apparatus. In addition, the same position may be set under the same condition even though the setting is performed repeatedly multiple times, which makes it possible to manufacture the secondary battery without causing an error between the manufactured secondary batteries.

Although preferred examples of the present invention have been described in detail hereinabove, the right scope of the present invention is not limited thereto, and many variations and modifications of those skilled in the art using the basic concept of the present invention, which is defined in the following claims, will also belong to the right scope of the present invention.

### description of Reference Numerals>

10: Multipurpose jig
100: Main body part
200: First measurement part
210: Tab shape part
300: Second measurement part
310: Protruding portion
320: Graduation part

## Claims

1. A multipurpose jig, which is used to set a secondary battery manufacturing apparatus, the multipurpose jig comprising:
a main body part;
a first measurement part protruding from one end of the main body part based on a longitudinal direction of the main body part; and
a second measurement part formed to have a stepped portion at the other end thereof based on the longitudinal direction of the main body part.

2. The multipurpose jig of claim 1, wherein:
the first measurement part protrudes from a center based on a thickness direction of the main body part.

3. The multipurpose jig of claim 2, wherein:
a position of the first measurement part corresponds to a position of each of electrode tabs connected to a plurality of electrodes included in the secondary battery.

4. The multipurpose jig of claim 2, wherein:
a thickness of the first measurement part corresponds to a thickness of each of electrode tabs connected to a plurality of electrodes included in the secondary battery.

5. The multipurpose jig of claim 1, wherein:
a graduation part is provided on a lateral surface of the second measurement part and formed on a protruding portion further protruding outward from the stepped portion.

6. The multipurpose jig of claim 1, wherein:
the multipurpose jig is configured by a 3D printer.

7. A method of setting a secondary battery manufacturing apparatus by using the multipurpose jig for manufacturing a secondary battery according to claim 1, the method comprising:
moving the multipurpose jig to a setting part of the secondary battery manufacturing apparatus to be set so that the first measurement part is directed toward the setting part; and
setting a position of the setting part based on the first measurement part.

8. The method of claim 7, wherein:
the setting part comprises an upper device and a lower device based on electrode tabs connected to a plurality of electrodes included in the secondary battery,
and wherein the setting of the position of the setting part comprises identifying whether at least one of the upper device and the lower device is in contact with at least one of the upper device and the lower surface of the first measurement part.

9. A method of setting a secondary battery manufacturing apparatus by using the multipurpose jig for manufacturing a secondary battery according to claim 1, the method comprising:
moving the multipurpose jig to a setting part of the secondary battery manufacturing apparatus to be set so that the second measurement part is directed toward the setting part; and
setting a position of the setting part based on the second measurement part.

10. The method of claim 9, wherein:
the setting part comprises an upper device and a lower device based on electrode tabs connected to a plurality of electrodes included in the secondary battery,
and wherein the setting of the position of the setting part comprises identifying, by means of the second measurement part, whether the upper device and the lower device are aligned to be spaced apart from a working stage, on which the secondary battery is disposed, by the same distance.

11. The method of claim 10, wherein:
a graduation part is provided on a lateral surface of the second measurement part and formed on a protruding portion further protruding outward from the stepped portion.

12. The method of claim 11, wherein:
the identifying of whether the upper device and the lower device are aligned to be spaced apart from the working stage by means of the second measurement part comprises:
bringing an end of the protruding portion into contact with the upper device and measuring a first interval between the working stage and the upper device by means of the graduation part;
inverting the multipurpose jig, bringing the end of the protruding portion into contact with the lower device, and measuring a second interval between the working stage and the lower device by means of the graduation part; and
identifying whether the first interval and the second interval are equal to each other and correcting the setting part so that the first interval and the second interval are equal to each other.

13. The method of claim 11, wherein:
the identifying of whether the upper device and the lower device are aligned to be spaced apart from the working stage by means of the second measurement part comprises:
disposing the secondary battery on the working stage so that the electrode tab is disposed between the upper device and the lower device;
disposing the multipurpose jig on the secondary battery so that a lateral surface of the secondary battery is parallel to the graduation part; and
setting, by the graduation part, an interval between an end of a separator of the secondary battery and the upper device to a predetermined value.
